# EUROPÄISCHE PATENTSCHRIFT

(11) **EP 3 964 752 B1**
(45) Veröffentlichungstag und Bekanntmachung des Hinweises auf die Patenterteilung: **07.02.2024**
(21) Anmeldenummer: 21201665.3
(22) Anmeldetag: 15.12.2020
(51) Int. Cl.: F23G 5/50, F23N 5/08

(54) **VERFAHREN ZUM BETREIBEN EINER FEUERUNGSANLAGE**
METHOD FOR OPERATING A COMBUSTION PLANT
PROCÉDÉ DE FONCTIONNEMENT D'UNE INSTALLATION DE COMBUSTION

(30) Priorität: 14.02.2020 DE 102020000980
(43) Veröffentlichungstag der Anmeldung: 09.03.2022
(62) Teilanmeldung aus: 20000469.5
(73) Patentinhaber: Martin GmbH für Umwelt- und Energietechnik, 80807 München (DE)
(72) Erfinder: Jell, Sebastian Josef, 81667 München (DE); Schönsteiner, Max Josef, 80995 München (DE); Martin, Johannes Ulrich, 81247 München (DE)
(74) Vertreter: Castell, Klaus

(56) Entgegenhaltungen:
- WO-A1-90/09552
- WO-A1-2017/175483
- WO-A1-2021/075484
- JP-A- 2002 206 722
- JP-A- 2002 267 134
- JP-A- 2018 155 411
- JP-A- 2019 132 485

## Beschreibung

Die Erfindung betrifft ein Verfahren zum Betreiben einer Feuerungsanlage. Beim Betreiben einer Feuerungsanlage ist es wichtig, dass von der Aufgabeschurre über den Feuerrost bis zum Schlackenaustrag eine definierte Menge Material pro Zeit die Feuerungsanlage durchläuft.

An der Aufgabeschurre wird ein Trichter im Chargenbetrieb über einen Greifer mit Material gefüllt. Dieses Material ist ein mit positiver Energiebilanz, chemisch umwandelbar Stoff und im Rahmen dieser Anmeldung vorzugsweise Müll. Dieses Material kann nass und schwer sein und schnell in den Trichter hinein rutschen, es kann auf den Wandungen des Trichters liegen bleiben, sich im Trichter versperren oder aus anderen Gründen nicht kontinuierlich über den Trichter in den Bereich des Feuerungsrostes gelangen.

Auf dem Feuerungsrost entzündet sich das Material und es brennt mit unterschiedlicher Intensität und Wärmefreisetzung, abhängig von der Zusammensetzung des Mülls. Wenn mehrere Roste nebeneinander betrieben werden, besteht darüber hinaus die Möglichkeit, dass bei der Bewegung des Mülls über unterschiedliche Rostbahnen der Müll auch unterschiedlich ausbrennt.

In vielen Fällen dienen Feuerungsanlagen, insbesondere Müllverbrennungsanlagen, der umweltfreundlichen Entsorgung von Abfällen mit möglichst geringen Emissionen und der Erzeugung von Energie. Hierfür sollte die Wärmefreisetzung möglichst konstant sein, um einerseits eine kontrollierte Verbrennung zu erreichen und andererseits eine möglichst unveränderte konstante Dampfleistung bereitzustellen.

Die JP H 11 37436 A und die WO 2017-175483 A beschreiben die Verwendung eines lernenden Systems in der Bildauswertung zur Bestimmung der Brennbettdicke und die JP 2002 267134 A beschreibt ein gattungsgemäßes Verfahren.

Der Erfindung liegt daher die Aufgabe zu Grunde, die letztlich erzeugte Feuerungsleistung, die sich in der Regel in der Dampfleistung widerspiegelt, möglichst konstant zu halten.

Diese Aufgabe wird mit einem Verfahren zum Betreiben einer Feuerungsanlage mit den Merkmalen des Patentanspruchs 1 gelöst.

Die Rutsche ist dabei eine gegenüber der Waagerechten schräge Fläche der Aufgabeschurre. Die Rutsche kann eine untere oder eine seitliche Fläche der Aufgabeschurre sein, wobei an diesen Flächen das auf die Schurre aufgegebene Material entlang gleitet, um zur Feuerungsanlage zu gelangen.

Sofern in einem bestimmten Bereich das Wandmaterial der Rutsche, das in der Regel eine Eisenfläche ist, bedeckt ist und abhängig von der Bewegung des Beschicckolbens statisch ist oder sich die Bedeckung verändert, ist davon auszugehen, dass das Material ordnungsgemäß zur Feuerungsanlage gleitet. Die Bewegung des Brennstoffs auf der Rutsche in Richtung der Feuerung ist mit der Bewegung des Beschickkolbens gekoppelt. Bewegt sich dieser so bewegt sich das Material. Bewegt sich dieser nicht, so bewegt sich das Material nicht. Ist dieser Zusammenhang nicht gegeben und bewegt sich das Material obwohl sich der Beschicker nicht bewegt oder bewegt sich das Material nicht obwohl sich der Beschicker bewegt, besteht ein Fehler, der darauf hinweist, dass das Material nicht ordnungsmäßig zur Feuerungsanlage gleitet. Dabei kann ein senkrechter Wandbereich oder ein Bereich auf der Rutsche beobachtet werden. Vorzugsweise wird eine Fläche der Schurre beobachtet, die als Rutsche gegenüber der Waagrechten einen möglichst kleinen Winkel hat, da dann eine bei fehlerhaftem Nachrutschen detektierte Fläche größer ist.

Daher wird vorzugsweise die Abdeckung einer unteren Seite der Schurre mit Material ausgewertet, während die anderen Seiten der Schurre in der Regel zusätzliche Anhaltspunkte bilden.

Ein bevorzugtes Ausführungsbeispiel sieht vor, dass die Position zumindest eines Grenzpunktes im Bild ermittelt wird, an dem einerseits Material die Schurre abdeckt und andererseits die Oberfläche der Schurre sichtbar ist. Vorteilhaft ist es, wenn mehrere Grenzpunkte ermittelt werden und in diesem Fall ist es auch möglich, die Position einer die Grenzpunkte verbindenden Linie im Bild zu ermitteln.

Zur Ermittlung der Befüllung der Schurre können auch definierte Punkte an der Seite der Schurre berechnet werden. In diesem Fall wird der Abstand mindestens eines Grenzpunktes zu einem definierten Punkt an einer Seite der Schurre ermittelt.

Mit anderen Worten ausgedrückt ist es vorteilhaft, die sichtbare Linie zwischen Schurre und Material zu ermitteln. Zur Erhöhung der Genauigkeit der Bildauswertung kann das Bild der Oberfläche der Schurre in mehrere Zonen aufgeteilt werden. Dies ermöglicht es, mit der Bildauswertung die Abdeckung in den einzelnen Zonen zu ermitteln. Daraus kann der Materialstrom an jeder beliebigen Stelle innerhalb der Schurre ermittelt werden. Ein dynamisches Verhalten der Feuerungsanlage kann ermittelt werden, wenn in zeitlichem Abstand mehrere Bilder aufgenommen werden und mittels der Bildauswertung aus der Veränderung der Bilder das Füllniveau in der Schurre ermittelt wird. Dies ermöglicht es dann auch, aus der Veränderung der Bilder die Geschwindigkeit zu ermitteln, mit der das Material zur Feuerungsanlage fließt. Die Geschwindigkeit bildet sodann eine Möglichkeit auch die Materialmenge zu erfassen, die zum Rost fließt.

Außerdem können mittels bildgebenden Verfahren die Positionsänderung und damit die Bewegung einzelner Komponenten oder Flächenbereiche innerhalb der Schurre nachverfolgt werden. Hierbei ist es notwendig in zeitlichem Abstand mehrere Bilder aufzunehmen. Diese Bilder können als Einzelbilder oder als Film aufgenommen werden. Innerhalb der Schurre werden signifikante Komponenten oder Flächenbereiche nach der Aufgabe des Materials ausgewählt und deren Bewegung detektiert (bis die ausgewählten Komponenten verdeckt werden). Die Auswahl erfolgt automatisiert und kann basierend auf mittels künstlicher Intelligenz eingelernter Strukturen und Gegenstände, basierend auf signifikanten Formen, Farben oder Umrissen von Material innerhalb der Schurre oder basierend auf zufälligen bzw. definierten Bereichen innerhalb der Schurre getroffen werden. Dieses Verfahren erlaubt, wie das Verfahren zur Erkennung einzelner Punkte im Übergang zwischen Schurre und Material, den Materialfluss innerhalb der Schurre festzustellen. Das Verfahren kann einzeln oder in Ergänzung zur Erkennung einzelner Punkte im Übergang zwischen Schurre und Material eingesetzt werden.

Ein im Bereich der Aufgabeschurre detektierter Fehler führt häufig unmittelbar zu Fehlern bei der Verbrennung auf dem Rost. Es wird daher weiterbildend vorgeschlagen, dass bei einer vorbestimmten Abdeckung oder einer vorbestimmten Änderung der Abdeckung der Schurre und insbesondere der Rutsche mit Material oder einem bestimmten Materialfluss abhängig von der Beschickerbewegung eine Aktion ausgelöst wird. Diese Aktion kann ein frühzeitiges Eingreifen in die Regelung der Anlage sein. Dabei kann beispielsweise ein Räumhub veranlasst werden und im Falle eines unkontrollierten Müllflusses kann durch das Luftmanagement und/oder die Rostgeschwindigkeit eine Anpassung erreicht werden. Auch ein Eingriff in die Beschickergeschwindigkeit und/oder Position ist im Falle unkontrollierten Müllflusses zur Optimierung der Verbrennung durchführbar. Zusätzlich ist eine Hilfestellung (Signal an den Kranführer) oder ein direkter Eingriff in die Materialaufgabe der Schurre durch den Kran abhängig vom detektierten Füllstand der Schurre möglich.

Der Einsatz einer Bildauswertung ermöglicht es, in Flussrichtung des Materials am Ende des Bildes den Übergang von Material zu Hintergrund als Position mindestens eines Punktes und vorzugsweise an der Linie zu ermitteln. Alternativ oder kumulativ zur Abdeckung der Rutsche kann somit bei einer stationären Anordnung der Kamera am ermittelten Bild die Höhe einer Linie ausgewertet werden, die durch den Übergang von Material zu Schurre ermittelt werden kann. Hierfür können einzelne Punkte oder eine durchgehende Linie, die auch gemittelt werden kann, ermittelt werden.

Dies ermöglicht es weiterbildend, dass der Punkt oder die Linie mit einem Grenzwert verglichen werden und bei Überschreiten dieses Grenzwertes eine Aktion ausgelöst wird. Diese Aktion entspricht den oben genannten Aktionen.

Es hat sich aber auch herausgestellt, dass nicht nur an der Aufgabeschurre, sondem auch am Ende des Feuerungsrostes eine Bildauswertung dazu verwendet werden kann, auf die Feuerungsanlage einzuwirken.

Feuerungsanlagen mit einem Rost, an dessen Ende eine Kamera angeordnet ist, sind bekannt. Dabei bildet das Ende des Rostes den Bereich, an dem die Schlacke auf dem Rost anfällt. Eine dort positionierte Kamera, die vom Schlackenbereich her zum Brennbett gerichtet ist, zeigt, wie das Material im Brennbett verbrennt. Dabei zeigt die Helligkeit die Intensität des Ausbrands und der Ort der Helligkeit zeigt, wo das Material auf dem Rost besonders gut ausbrennt.

Erfindungsgemäß wird nun vorgeschlagen, diese Kamera mit einer Bildauswertung zu kombinieren, die eine Ausbrandlinie sowie optional eine Brennbettdicke und/oder die Bewegung einzelner Komponenten oder Flächenbereiche ermittelt. Bei einer stationären Kamera zeigt das Bild das Brennbett und statische Merkmale innerhalb des Feuerraums. Der Abstand zwischen statischem Merkmal und Brennbett ist direkt proportional zur Höhe des Brennbetts. Ein zu hohes Brennbett lässt auf einen Betrieb schließen, bei dem zu viel Material aufgegeben oder eine zu geringe Schürbewegung, die das Material zu langsam bewegt. Ein besonders niedriges Brennbett, das aus einer niedrigen Linie im Bild abgeleitet werden kann, lässt auf eine Materialzufuhr schließen, bei der nicht genügend Material aufgegeben wird und/oder auf eine zu intensive, die das Material zu schnell bewegt.

Erfindungsgemäß wird nun vorgeschlagen, diese Kamera mit einer Bildauswertung zu kombinieren, die die Ausbrandlinie ermittelt. Bei einer stationären Kamera zeigt das Bild den Übergang zwischen brennendem und ausgebranntem Material als Ausbrandlinie. Dieser Kontrast bildet in der Praxis eine Linie, die entweder näher am oberen Rand des mit der Kamera aufgenommenen Bildes oder näher am unteren Rand dieses Bildes liegt. Die Höhe der Linie ist somit direkt proportional zur Lage des Feuers. Ein in Richtung der Längserstreckung des Rostes zu langes Feuer lässt auf eine Materialzufuhr schließen, bei der zu viel Material aufgegeben wird oder das Material schlecht brennbar ist. Ein besonders kurzes Feuer, das aus dem Bild abgeleitet werden kann, lässt auf eine Materialzufuhr schließen, bei der nicht genügend Material aufgegeben wird. Weiterhin erlaubt die Änderung der Ausbrandlinie Rückschlüsse über die Schürwirkung des Rostes und das Primärluftmanagement und ermöglicht es diese Parameter anzupassen um die Verbrennung zu verbessern. Auch eine Vergleichmäßigung der Brennstoffmenge zwischen verschiedenen Rostbahnen wird mittels der Ausbrandlinie ermöglicht.

Ergänzend können mittels bildgebenden Verfahren die Bewegung einzelner Komponenten oder Fraktionen innerhalb des Brennbetts nachverfolgt werden. Fraktionen sind hierbei Flächenbereiche, die durch ihre Struktur als solche erkennbar sind oder als Flächenbereiche ausgewählt wurden. Hierbei ist es notwendig in zeitlichem Abstand mehrere Bilder aufzunehmen. Innerhalb des Brennbetts werden signifikante Komponenten oder Fraktionen nach der Aufgabe des Materials ausgewählt und deren Bewegung solange detektiert bis die ausgewählten Komponenten verdeckt werden. Die Auswahl erfolgt automatisiert und kann basierend auf mittels künstlicher Intelligenz eingelernter Strukturen und Gegenständen, basierend auf signifikanten Formen, Farben oder Umrisse von Material innerhalb der Schurre oder basierend auf zufälligen bzw. definierten Bereichen innerhalb der Schurre getroffen werden. Dieses Verfahren erlaubt den Materialstrom innerhalb des Brennbetts festzustellen. Das Verfahren kann einzeln oder in Ergänzung zur Erkennung der Brennbetthöhe und der Feuerlänge eingesetzt werden.

Auf diese Art und Weise lässt auch eine Bildauswertung am Ende des Rostes einen Rückschluss auf die Aufgabevorrichtung zu.

Daher ist es möglich, mit einer gut eingestellten Bildauswertung und vorzugsweise auch mit einem lernenden System, wie beispielweise einem neuronalen Netzwerk, ein zu dünnes oder zu dickes Brennbett und ein zu langes oder zu kurzes Feuer, das heißt eine falsche Position der Ausbrandlinie zu erkennen.

Diese Informationen kann mit einem Sollwert verglichen werden, sodass abhängig von der Feuerlage und/oder der Brennbettdicke und/oder der Bewegung einzelner Komponenten oder Flächenbereiche eine Aktion ausgelöst werden kann. Diese Aktion kann wiederum, wie oben angegeben, ein Einwirken auf die Förderung auf dem Rost oder die Gasverhältnisse sein. Daher wird weiterbildend vorgeschlagen, dass abhängig von der Feuerlage auf dem Rost, insbesondere in Längsrichtung des Rostes, und/oder der Brennbettdicke automatisch auf eine Steuerung oder eine Regelung der Feuerungsanlage eingewirkt wird. Und daher wird vorgeschlagen, dass die Rostgeschwindigkeit abhängig von der Feuerlage und/oder der Brennbettdicke gesteuert oder geregelt wird. Dabei ist es besonders vorteilhaft, wenn die Rostgeschwindigkeit einzelner Rostzonen oder nebeneinander liegender Rostbahnen gesteuert oder geregelt wird.

Kumulativ oder alternativ kann auch die Luftführung der Feuerungsanlage abhängig von der Brennbettdicke und/oder der Feuerlage gesteuert oder geregelt werden. Dabei wird insbesondere die Primärluft der Feuerungsanlage abhängig von der Feuerlage und/oder der Brennbettdicke gesteuert oder geregelt.

Besonders vorteilhaft ist es, wenn die Feuerung einzelne Rostbahnen aufweist, die mit einer Bildauswertung analysiert werden, sodass die Beschickung einzelner Rostbahnen der Feuerungsanlage abhängig von der Brennbettdicke und/oder der Feuerlage gesteuert oder geregelt werden kann. Dafür kann beispielsweise die Hublänge angepasst werden oder es wird ein Nullpunktversatz des Beschickers eingestellt.

Besonders vorteilhaft ist es, wenn die einzelnen Rostbahnen über mehrere Antriebe verfügen, sodass die Intensität der Schürbewegung der einzelnen Rostzonen abhängig von der Brennbettdicke und/oder der Feuerlage gesteuert oder geregelt werden kann. Dafür kann beispielsweise die Schürgeschwindigkeit angepasst werden.

Vorteilhaft ist eine Kopplung beider optischer Kamerasysteme. So können ausgelöste Eingriffe durch die Kamera oberhalb der Schurre mittels der Kamera am Brennbettende überprüft werden. Durch den Einsatz von Regelkreisen oder neuronalen Netzwerken ist es möglich die ausgelösten Eingriffe zu optimieren.

Auch unabhängig von den zuvor genannten Verfahrensschritten wird ein Verfahren zum Betreiben einer Feuerungsanlage mit mindestens einem Rost, der mehrere Rostzonen und/oder mehrere Rostbahnen aufweist, und mehreren Brennstoffzufuhreinrichtungen vorgeschlagen, bei dem zur Einstellung einer gleichmäßigen Wärmefreisetzung auf dem Rost die Temperatur pro Rostzone und/oder pro Rostbahn gemessen wird und abhängig von der gemessenen Temperatur die Brennstoffzufuhreinrichtungen gesteuert werden.

Dabei ist es besonders vorteilhaft, wenn pro Rostzone und/oder pro Rostbahnen mindestens eine Temperaturmesseinrichtung verwendet wird. Die Temperaturmessung kann parallel zu den Rostsegmenten oder im ersten Strahlungszug erfolgen. Damit die Genauigkeit der Temperaturmessung nicht durch Verwirbelungen beeinträchtigt wird, wird vorgeschlagen, dass eine Aufnahme der Temperaturänderung nahe an der Feuerung und spätestens in einem Niveau des Strahlungszuges erfolgt, in die die Rauchgase nach 1 bis 15 Sekunden gelangen.

Vorteilhafte Ausführungsvarianten werden in der Zeichnung dargestellt und im Folgenden näher beschrieben.

Es zeigt:
- Figur 1: schematisch eine Rostfeuerung mit einer Analyse der Schurre A, einer Analyse des Feuers B und einer Analyse der Temperaturen auf der Rostbahn C,
- Figur 2: einen Schnitt durch den Bereich einer Aufgabeschurre einer Feuerungsanlage,
- Figur 3: eine Draufsicht auf die in Figur 2 gezeigte Schurre,
- Figur 4: eine vergrößerte Ansicht aus Figur ,
- Figur 5: ein Bild mit einer in Figur 1 bei B angeordneten Kamera,
- Figur 6: eine Feuerungsanlage mit zwei Strahlungszügen und
- Figur 7: die in Figur 6 gezeigte Feuerungsanlage in perspektivischer Ansicht.

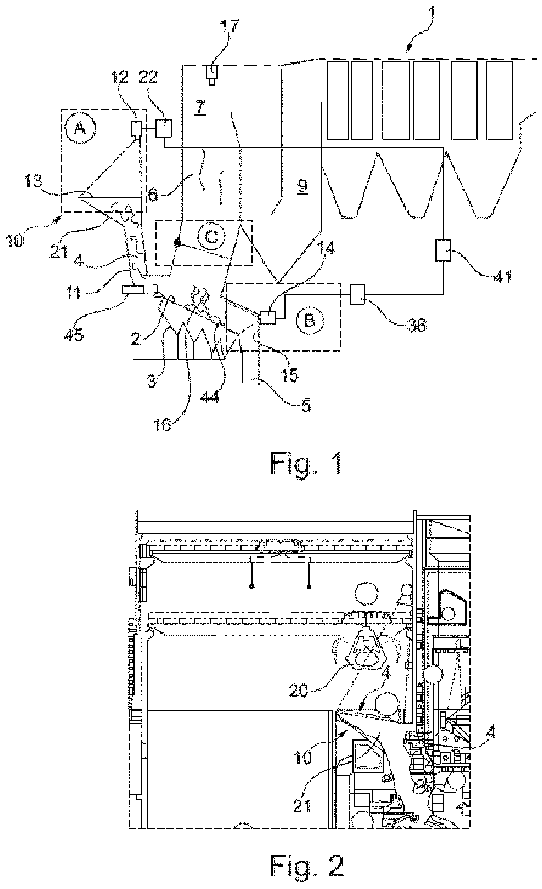

Die in Figur 1 gezeigte Feuerungsanlage 1 ist eine Rostfeuerung mit einem Rost 2, unter dem eine Primärluftzugabe 3 angeordnet ist. Das auf dem Rost 2 verbrannte Material 4 wird über den Rost 3 zu einem Schlackenaustrag 5 gefördert. Das beim Verbrennen des Materials 4 auf dem Rost 2 entstehende Rauchgas 6 gelangt in einen ersten Zug 7 und von dort in weitere Züge 8 und 9, um Wasser zu erhitzen, das als Dampf für eine Energieerzeugungsanlage (nicht gezeigt) genutzt wird.

Beim Betreiben der Feuerungsanlage 1 gelangt Müll als Material 4 von der Schurre 10 durch einen Zuführkanal 11 zum Rost 2 und von dort zum Schlackenaustrag 5. Dabei wird eine Kamera 12 dazu verwendet, die Oberfläche 13 der Schurre zu erfassen und als Bild 14 darzustellen.

Eine weitere Kamera 34 am Ende 15 des Rostes 2 ist auf das Material 4 auf dem Rost 2 und die bei der Verbrennung des Materials 4 entstehende Flamme 16 gerichtet. Dazwischen kann mit einer dritten Kamera 17, die auf dem Rost 2 erzeugte Flamme 16 von oben beobachtet werden.

Die Figur 2 zeigt, wie mittels eines Greifers 20 Material 4 in die Aufgabeschurre 10 geworfen werden kann, das dann auf einer Rutsche 21 in den Kanal 4 und von dort zum Feuerrost 2 gelangt.

Die Kamera 12 ist mit einer Bildauswertung 22 verbunden, die die Abdeckung der Schurre 10 und insbesondere der Rutsche 21 mit Material 4 ermittelt.

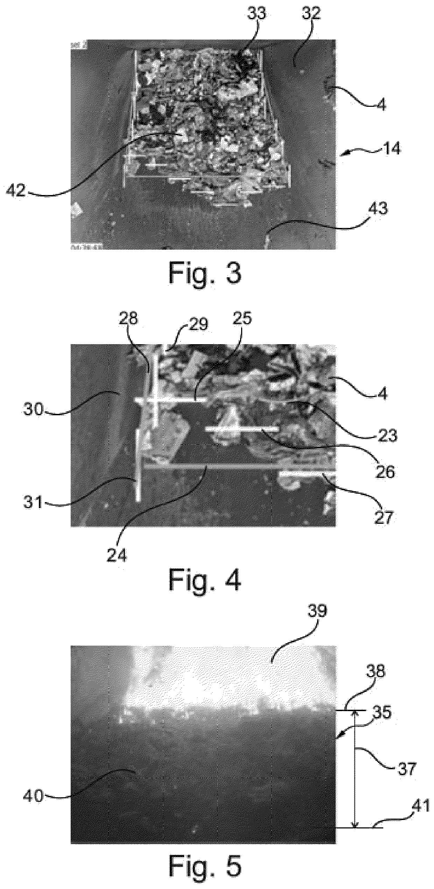

Die Figur 3 und insbesondere deren in Figur 4 gezeigte Vergrößerung zeigen Bereiche 23, in denen die Rutsche 21 mit Material 4 bedeckt ist, und einen Bereich 24 sowie einen Bereich 43, in dem die Oberseite der Rutsche 21 zu sehen ist, da sie in diesem Bereich 24 nicht mit Material 4 bedeckt ist.

Balken 25, 26 und 27 bilden Grenzpunkte im Bild 4, an denen einerseits Material 4 die Schurre 10 abdeckt und andererseits die Oberfläche der Schurre 10 sichtbar ist.

An der Seite 28 der Schurre 10 sind definierte Punkte 29, 30 und 31 als senkrechte Balken angedeutet. Dies ermöglicht es, den Schnittpunkt zwischen waagerechten Balken 25, 26 und 27 und senkrechten Balken 29, 30 und 31 zu ermitteln, um daraus auf die Befüllung der Schurre 10 zurückzuschließen.

Im Bild 14 der Figur 3 zeigt die Linie 33 den Übergang zwischen dem Material 4 und dem Hintergrund 33. Die Höhe dieser Linie 33 im Bild 4 und Abweichungen von einer geraden Linie geben Aufschluss über das Material in der Schurre 10.

Die Figur 5 zeigt ein Bild 35, das in Flussrichtung des Materials 4 am Ende des Rostes 2 mit einer Kamera 14 aufgenommen wurde. Aus diesem Bild 35 ermittelt eine Bildauswertung 36 die Brennbettdicke 37 als Abstand zwischen einer Linie 38 und einer Linie 41. Die Linie 38 ergibt sich aus dem Kontrast zwischen dem hellen Bereich 39 der Flammen 16 und dem dunklen Bereich 40 der Schlacke. Die Höhe der Linie 41 im Bild 35 kann durch Versuche ermittelt werden und ergibt sich auch bei einer Anlage, die noch kein Material 4 auf dem Rost 2 aufweist.

Die Bildauswerteinrichtungen 22 und 36 sind mit der Steuerung 41 der Feuerungsanlage 1 verbunden, sodass bei einem Überstreiten eines Grenzwertes auf die Regelung 41 der Feuerungsanlage eingewirkt werden kann, um die Rostgeschwindigkeit und/oder die Luftzuführung der Feuerungsanlage 1 abhängig von dem an der Schurre 10 ermittelten Grenzwert und/oder der Brennbettdicke 37 zu steuern oder zu regeln.

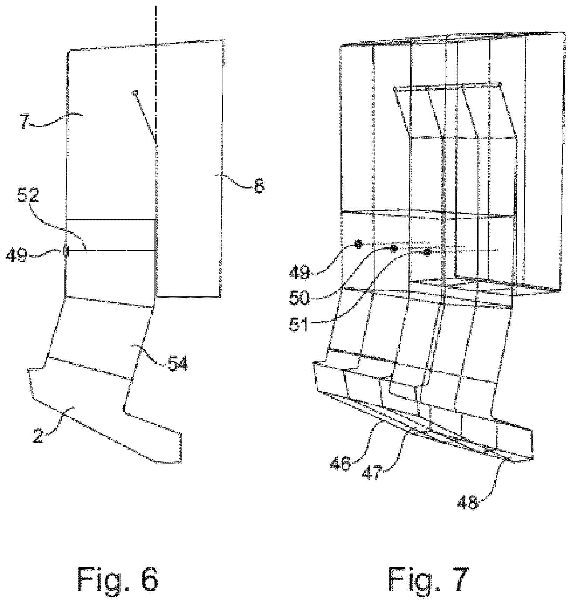

Figur 6 zeigt einen Feuerrost 2 und darüber den ersten Rauchgaszug 7, sowie daran anschließend den zweiten Rauchgaszug 8. Parallel zum Rost 2 oder waagerecht messend ist eine Temperaturmesseinrichtung 49 angeordnet. Dadurch entsteht oberhalb der Sekundärluftebene 54 eine Ebene 52 der Temperaturmessung. Die Figur 7 zeigt eine beispielhafte Anordnung der Temperaturmesseinrichtungen für eine Anlage mit 3 Rostbahnen 46, 47 und 48. Jeder Rostbahn ist eine Temperaturmesseinrichtung 49, 50 und 51 zugeordnet.

## Patentansprüche

1. Verfahren zum Betreiben einer Feuerungsanlage (1), die einen Rost (2) aufweist, an dessen Ende (15) eine Kamera (14) angeordnet ist, wobei mit einer Bildauswertung (36) eine Ausbrandlinie (38) ermittelt wird, sowie optional die Brennbettdicke (37) und/oder
die Bewegung einzelner Komponenten oder Flächenbereiche ermittelt werden, ***dadurch gekennzeichnet, dass*** über eine charakteristische Form der Ausbrandlinie (38) ein überschüttetes Brennbett erkannt wird.

2. Verfahren nach Anspruch 1, ***dadurch gekennzeichnet, dass*** abhängig von der Brennbettdicke (37) und/oder der Ausbrandlinie (38) und/oder der Bewegung einzelner Komponenten oder Flächenbereiche eine Aktion ausgelöst wird.

3. Verfahren nach einem der Ansprüche 1 oder 2, ***dadurch gekennzeichnet, dass*** abhängig von der Brennbettdicke (37) und/oder der Ausbrandlinie (38) und/oder der Bewegung einzelner Komponenten oder Flächenbereiche automatisch auf eine Steuerung (41) oder eine Regelung der Feuerungsanlage (1) eingewirkt wird.

4. Verfahren nach Anspruch einem der Ansprüche 1 bis 3, ***dadurch gekennzeichnet, dass*** die Rostgeschwindigkeit abhängig von der Brennbettdicke (37) und/oder der Ausbrandlinie (38) und/oder der Bewegung einzelner Komponenten oder Flächenbereiche gesteuert oder geregelt wird.

5. Verfahren nach einem der Ansprüche 1 bis 4, ***dadurch gekennzeichnet, dass*** die Luftzuführung (3) der Feuerungsanlage (1) abhängig von der Brennbettdicke (37) und/oder der Ausbrandlinie (38) und/oder der Bewegung einzelner Komponenten oder Flächenbereiche gesteuert oder geregelt wird.

6. Verfahren nach Anspruch 5, ***dadurch gekennzeichnet, dass*** Primärluft (3) der Feuerungsanlage (1) abhängig von der Brennbettdicke (37) und/oder der Ausbrandlinie (38) und/oder der Bewegung einzelner Komponenten oder Flächenbereiche gesteuert oder geregelt wird.

7. Verfahren nach einem der Ansprüche 1 bis 6, ***dadurch gekennzeichnet, dass*** die Beschickung einzelner Rostbahnen (46, 47, 48) der Feuerungsanlage (1) abhängig von der Brennbettdicke (37) und/oder der Ausbrandlinie (38) und/oder der Bewegung einzelner Komponenten oder Flächenbereiche gesteuert oder geregelt wird.

8. Verfahren nach einem der vorhergehenden Ansprüche bei der der Rost (2) mehrere Rostzonen und/oder mehrere Rostbahnen (46, 47, 48) aufweist, und mehreren Brennstoffzufuhreinrichtungen (45), ***dadurch gekennzeichnet, dass*** zur Einstellung einer gleichmäßigen Wärmefreisetzung auf dem Rost (2) die Temperatur pro Rostzone und/oder pro Rostbahn (46, 47, 48) gemessen wird und abhängig von der gemessenen Temperatur die Brennstoffzufuhreinrichtungen (45) gesteuert werden.

9. Verfahren nach Anspruch 8, ***dadurch gekennzeichnet, dass*** pro Rostzone und/oder pro Rostbahnen (46, 47, 48) mindestens eine Temperaturmesseinrichtung (49, 50, 51) verwendet wird.

10. Verfahren nach einem der Ansprüche 8 oder 9, ***dadurch gekennzeichnet, dass*** die Temperaturmessung parallel zum Rost (2) erfolgt.

11. Verfahren nach einem der Ansprüche 8 bis 10, ***dadurch gekennzeichnet, dass*** die Temperaturmessung im ersten Strahlungszug (7) erfolgt.

## Claims

1. Method for operating a furnace (1) which has a grate (2) at whose end (15) a camera (14) is arranged, wherein a burnout line (38) is determined using image evaluation (36), as well as optionally the combustion bed thickness (37), and/or the movement of individual components or surface areas is/are determined, ***characterized in that*** an overloaded combustion bed is detected via a characteristic shape of the burnout line (38).

2. . Method according to claim 1, ***characterized in that*** an action is triggered depending on the combustion bed thickness (37) and/or the burnout line (38) and/or the movement of individual components or surface areas.

3. . Method according to one of claims 1 or 2, ***characterized in that*** a control (41) or a regulation of the furnace (1) is automatically acted on depending on the combustion bed thickness (37) and/or the burnout line (38) and/or the movement of individual components or surface areas.

4. . Method according to one of claims 1 to 3, ***characterized in that*** the grate speed is controlled or regulated depending on the combustion bed thickness (37) and/or the burnout line (38) and/or the movement of individual components or surface areas.

5. . Method according to one of claims 1 to 4, ***characterized in that*** the air supply (3) of the furnace (1) is controlled or regulated depending on the combustion bed thickness (37) and/or the burnout line (38) and/or the movement of individual components or surface areas.

6. . Method according to claim 5, ***characterized in that*** the primary air (3) of the furnace (1) is controlled or regulated depending on the combustion bed thickness (37) and/or the burnout line (38) and/or the movement of individual components or surface areas.

7. . Method according to one of claims 1 to 6, ***characterized in that*** the loading of individual grate tracks (46, 47, 48) of the furnace (1) is controlled or regulated depending on the combustion bed thickness (37) and/or the burnout line (38) and/or the movement of individual components or surface areas.

8. . Method according to one of the preceding claims in which the grate (2) has multiple grate zones and/or multiple grate tracks (46, 47, 48), and multiple fuel supply devices (45), ***characterized in that*** the temperature per grate zone and/or per grate track (46, 47, 48) is measured and, depending on the measured temperature of the fuel supply devices (45), controlled in order to set a uniform release of heat on the grate (2).

9. . Method according to claim 8, ***characterized in that*** at least one temperature measuring device (49, 50, 51) is used per grate zone and/or per grate track (46, 47, 48).

10. . Method according to one of claims 8 or 9, ***characterized in that*** the temperature measurement is carried out parallel to the grate (2).

11. . Method according to one of claims 8 to 10, ***characterized in that*** the temperature measurement is carried out in the first radiation pass (7).

## Revendications

1. Procédé opérationnel d'une installation de combustion (1), qui comporte une grille (2) sur l'extrémité (15) de laquelle est placée une caméra (14), à l'aide d'une évaluation d'images (36) étant déterminée une ligne (38) de combustion complète, ainsi qu'en option l'épaisseur (37) du lit de combustion et/ou le déplacement de composants individuels ou de zones de surface, ***caractérisé en ce que*** sur une forme caractéristique de la ligne (38) de combustion complète, un lit de combustion submergé est identifié.

2. Procédé selon la revendication 1, ***caractérisé en ce qu**'en* fonction de l'épaisseur (37) du lit de combustion et/ou de la ligne (38) de combustion complète et/ou du déplacement de composants individuels ou de zones de surface, une action est déclenchée.

3. Procédé selon l'une quelconque des revendications 1 ou 2, ***caractérisé en ce qu**'en* fonction de l'épaisseur (37) du lit de combustion et/ou de la ligne (38) de combustion complète et/ou du déplacement de composants individuels ou de zones de surface, une intervention automatique sur une commande (41) ou une régulation de l'installation de combustion (1) est engagée.

4. Procédé selon l'une quelconque des revendications 1 à 2, ***caractérisé en ce que*** la vitesse de la grille est commandée ou régulée en fonction de l'épaisseur (37) du lit de combustion et/ou de la ligne (38) de combustion complète et/ou du déplacement de composants individuels ou de zones de surface.

5. Procédé selon l'une quelconque des revendications 1 à 4, ***caractérisé en ce que*** l'alimentation d'air (3) de l'installation de combustion (1) est commandée ou régulée en fonction de l'épaisseur (37) du lit de combustion et/ou de la ligne (38) de combustion complète et/ou du déplacement de composants individuels ou de zones de surface.

6. Procédé selon la revendication 5, ***caractérisé en ce que*** de l'air primaire (3) de l'installation de combustion (1) est commandé ou régulé en fonction de l'épaisseur (37) du lit de combustion et/ou de la ligne (38) de combustion complète et/ou du déplacement de composants individuels ou de zones de surface.

7. Procédé selon l'une quelconque des revendications 1 à 6, ***caractérisé en ce*** le chargement de parcours de grille (46, 47, 48) individuels de l'installation de combustion (1) est commandé ou régulé en fonction de l'épaisseur (37) du lit de combustion et/ou de la ligne (38) de combustion complète et/ou du déplacement de composants individuels ou de zones de surface.

8. Procédé selon l'une quelconque des revendications précédentes, lors duquel la grille (2) comporte plusieurs zones de grille et/ou plusieurs parcours de grille (46, 47, 48) et plusieurs dispositifs d'alimentation (45) de combustible, ***caractérisé en ce que*** pour le réglage d'un dégagement de chaleur régulier sur la grille (2), la température est mesurée par zone de grille et/ou par parcours de grille (46, 47, 48) et en fonction de la température mesurée, les dispositifs d'alimentation (45) de combustible sont commandés.

9. Procédé selon la revendication 8, ***caractérisé en ce qu**'au* moins un dispositif de mesure de la température (49, 50, 51) est utilisé par zone de grille et/ou par parcours de grille (46, 47, 48).

10. Procédé selon l'une quelconque des revendications 8 ou 9, ***caractérisé en ce que*** la mesure de la température s'effectue à la parallèle de la grille (2).

11. Procédé selon l'une quelconque des revendications 8 à 10, ***caractérisé en ce que*** la mesure de la température s'effectue dans le premier passage radiatif (7).
